(19) **Europäisches Patentamt** / **European Patent Office** / **Office européen des brevets**

(11) **EP 2 274 869 B1**

(12) **FASCICULE DE BREVET EUROPEEN**

(45) Date de publication et mention de la délivrance du brevet:
**04.05.2016 Bulletin 2016/18**

(21) Numéro de dépôt: **09727941.8**

(22) Date de dépôt: **18.03.2009**

(51) Int Cl.:
**H04L 9/28** *(2006.01)*    **G06F 7/72** *(2006.01)*
**G06F 21/00** *(2013.01)*    **H04L 9/00** *(2006.01)*

(86) Numéro de dépôt international:
**PCT/FR2009/050450**

(87) Numéro de publication internationale:
**WO 2009/122095 (08.10.2009 Gazette 2009/41)**

(54) **PROTECTION EN BOÎTE-BLANCHE D'ALGORITHMES CRYPTOGRAPHIQUES COMPRENANT LE CALCUL D'UNE FORME QUADRATIQUE**

**WHITE-BOX-SCHUTZ EINES KRYPTOGRAFISCHER ALGORITHMEN, DIE DIE BERECHUNG EINER QUADRATISCHEN FORM BEINHALTEN**

**WHITE-BOX PROTECTION OF CRYPTOGRAPHICAL ALGORITHMS COMPRISING A CALCULATION IN QUADRATIC FORM**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **21.03.2008 FR 0851884**

(43) Date de publication de la demande:
**19.01.2011 Bulletin 2011/03**

(73) Titulaire: **Orange**
**75015 Paris (FR)**

(72) Inventeurs:
• **BILLET, Olivier**
  **F-06140 Tourrettes sur Loup (FR)**
• **FRANCFORT, Stanislas**
  **F-14210 Evrecy (FR)**
• **BENADJILA, Ryad**
  **F-75020 Paris (FR)**

(56) Documents cités:
**WO-A-2007/116171**

• CHOW S ET AL: "White-box cryptography and an AES implementation" SAC 2002. LECTURE NOTES IN COMPUTER SCIENCE, vol. 2595, 15 août 2002 (2002-08-15), pages 250-270, XP002462505 Springer-Verlag, Berlin, Allemagne ISBN: 3540006222 cité dans la demande
• KIPNIS A ET AL: "UNBALANCED OIL AND VINEGAR SIGNATURE SCHEMES - Extended Version" INTERNET CITATION, [Online] 11 juin 2003 (2003-06-11), pages 1-17, XP002381320 Extrait de l'Internet: URL:http://citeseer.ist.psu.edu/kipnis99un balanced.html> [extrait le 2006-05-17]
• OLIVIER BILLET ET AL: "Cryptanalysis of Rainbow" SECURITY AND CRYPTOGRAPHY FOR NETWORKS LECTURE NOTES IN COMPUTER SCIENCE;;LNCS, SPRINGER, BERLIN, DE, vol. 4116, 1 janvier 2006 (2006-01-01), pages 336-347, XP019039391 ISBN: 9783540380801
• YONGXIN ZHOU ET AL.: "Information Hiding in Software with Mixed Boolean-Arithmetic Transforms" WISA 2007. LECTURE NOTES IN COMPUTER SCIENCE, vol. 4867, 28 août 2006 (2006-08-28), pages 61-75, XP019086256 Springer, Berlin, Allemagne ISBN: 9783540775348

EP 2 274 869 B1

## Description

L'invention se rapporte au domaine de la protection des contenus numériques ainsi que des logiciels contre l'usage non autorisé de ces contenus et logiciels. Plus précisément, l'invention concerne des procédés cryptographiques, par exemple pour le chiffrement, l'authentification ou la signature électronique, qui sont aptes à résister aux attaques dites "attaques en boîte-blanche".

Dans le contexte du déploiement des réseaux de communications et des services audiovisuels, la distribution de contenus numériques devient problématique sur le plan des droits de propriété. En effet, la recopie de données numériques en très grand nombre, ainsi que leur redistribution à grande échelle, est devenue à la fois facile et peu coûteuse pour les particuliers. Par exemple, les industries dont les bénéfices reposent sur la distribution de données numériques (comme la musique, la vidéo, les logiciels de jeux, de navigation sur Internet, ou de manipulation de flux audiovisuels) souhaitent protéger ces données numériques contre une utilisation sortant du cadre défini par un contrat commercial entre fournisseur et consommateur ; c'est l'objet de la gestion des droits numériques (en anglais, *"Digital Rights Management"* ou DRM). Pour une présentation générale des problèmes liés à la protection des logiciels, on pourra consulter l'article de P.C. van Oorschot intitulé "Revisiting Software Protection" (Actes de la 6ème Conférence Internationale "Information Security', Springer-Verlag, pages 1 à 13, 2003).

Le problème de sécurité auquel se rapporte la présente invention est celui de la protection d'un contenu numérique ou d'un logiciel, non seulement contre des pirates extérieurs à la plateforme, mais également et surtout contre l'utilisateur légitime de la plateforme informatique hébergeant ces données numériques. En effet, cet utilisateur peut être tenté de faire usage de ces données numériques en-dehors du cadre contractuel dans lequel elles lui ont été confiées. Dans ce contexte, les procédés cryptographiques habituels (chiffrement, signature, clés de session) sont inopérants puisque les clés secrètes requises pour pouvoir utiliser les données numériques sous contrat ont été évidemment fournies à l'utilisateur. L'utilisateur indélicat peut donc, par exemple, chercher à localiser ces clés secrètes en mémoire, ou chercher à identifier les étapes principales mises en oeuvre dans le logiciel, pour en faire un usage non autorisé.

Ce contexte de protection d'un contenu numérique est appelé "contexte de protection en boîte-blanche", suite à l'article de S. Chow, P. Eisen, H. Johnson et P.C. van Oorschot intitulé "White-Box Cryptography and an AES Implementation" (Actes du 9ème "Annual Workshop on Selected Areas in Cryptography", Springer, pages 250 à 270, 2003), et à l'article des mêmes auteurs intitulé *"A White-Box DES Implementation for DRM Applications"* (Actes du "Second ACM Workshop on Digital Rights Management", Springer, pages 1 à 15, 2003). Cette dénomination souligne la différence de ce contexte avec celui, bien connu, de la "boîte-noire", dans lequel un pirate cherchant à attaquer un logiciel ne peut observer que des couples (données d'entrée)/(données de sortie) associés à ce logiciel, sans avoir accès aux étapes de traitement intermédiaires mises en oeuvre par le logiciel ; dans le contexte d'attaque en boîte-blanche, en revanche, un attaquant peut observer pas à pas l'exécution dynamique d'un logiciel, et même modifier des instructions de ce logiciel pour pouvoir étudier les conséquences de ces modifications sur le traitement effectué par le logiciel.

Notamment, un attaquant en boîte-blanche peut chercher à retrouver les valeurs de clés secrètes enregistrées dans un logiciel (on dit que ce logiciel est une "instanciation" particulière de l'algorithme général qu'il met en oeuvre), afin d'utiliser ces clés secrètes dans un logiciel équivalent dont dispose l'attaquant (en effet, l'algorithme mis en oeuvre par le logiciel est dans certains cas connu dans ses étapes principales), ou sur une autre plateforme. La protection de ces clés secrètes est donc essentielle, mais rendue d'autant plus difficile que les clés cryptographiques obéissent généralement à un format bien particulier qui les distingue des autres données enregistrées sur la plateforme informatique, ce qui permet à un attaquant de les y repérer assez facilement.

Prenons par exemple le cas de l'algorithme de chiffrement/déchiffrement bien connu appelé "AES" (initiales des mots anglais *"Advanced Encryption Standard",* Standard FIPS 197 publié par le *National Institute of Standards and Technology* américain). Cet algorithme comprend une succession de "tours" (au nombre de dix) utilisant chacun une clé secrète respective, ces clés de tour étant dérivées d'une clé secrète maîtresse de 128, 192 ou 256 bits. Il s'agit donc de dissimuler la valeur de ces clés de tour. Par ailleurs, l'algorithme AES comprend des étapes (du type : addition de la clé de tour/substitution/permutation circulaire/transformation linéaire) que, pour des raisons d'efficacité de calcul dans les mises en oeuvre logicielles, il est préférable de calculer au moyen de tables de valeurs. Notamment, la consultation de tables représentant une transformation linéaire ne requiert pas beaucoup de ressources, même pour un grand nombre de variables, dans la mesure où l'on peut construire une table pour chaque colonne (ou groupe de colonnes) de la matrice de transformation linéaire, puis rassembler les valeurs obtenues. Prenons par exemple le cas où l'on applique une transformation linéaire $L$, soit $y = Lx$ , où $x$ et $y$ sont des multiplets de 128 bits ; dans ce cas, on associe à chaque valeur de $i$ allant de 1 à 128 une table n° $i$ qui contient la série des valeurs du terme $L_{ji}x_i$ pour $x_i = 0$ et $j$ allant de 1 à 128, ainsi que la série des 128 valeurs des composantes du terme $L_{ji}X_i$ pour $x_i = 1$ et $j$ allant de 1 à 128, ce qui requiert une capacité de stockage de 2 x 128 = 256 bits par table ; ainsi, à l'exécution, la valeur de la composante $y_j$ de $y$ est obtenue dynamiquement en lisant dans chaque table (resp. *n°i*) la contribution due à la composante de $x$ correspondante (resp. selon que $x_i = 0$ ou $x_i = 1$), et en ajoutant ces 128 contributions.

Malheureusement, si l'on met en oeuvre naïvement l'AES sous forme de tables, les clés de tour peuvent être très facilement calculées à partir des tables par un attaquant en boîte-blanche, puisque l'opération réalisée par chaque table, correspondant à une étape respective de l'AES, est connue. L'objet de l'article *"White-Box Cryptography and an AES Implementation"* mentionné ci-dessus est précisément de résoudre ce problème. La solution comprend l'utilisation, à la fin de chaque étape de l'AES, d'une "transformation parasite" secrète des données sortantes, suivie d'une "transformation parasite inverse" en entrée de l'étape suivante de l'AES, de façon à ce qu'un attaquant en boîte-blanche ne puisse pas en déduire le flot de données d'origine.

Cette technique s'avère être efficace pour l'AES, et plus généralement, pour tout algorithme de cryptographie faisant appel à des transformations linéaires. Or il a été proposé récemment (cf. par exemple l'algorithme de signature décrit dans l'article de A. Kipnis, J. Patarin, et L. Goubin intitulé "Unbalanced Oil and Vinegar Signature Schemes", EUROCRYPT 1999, pages 206 à 222, ou bien l'algorithme de chiffrement à flot décrit dans la demande WO2007/116171 au nom de France Télécom) des procédés cryptographiques faisant appel à des formes *quadratiques ;* autrement dit, un tel procédé utilise un système de *m* polynômes quadratiques à *n* variables $x_1$ à $x_n$, avec $n > 1$, sur un corps fini *K,* ces polynômes étant donc de la forme

$$y_k = \sum_{1 \le i \le j \le n} \alpha_k^{(ij)} x_i x_j + \sum_{1 \le j \le n} \beta_k^{(j)} x_j + \gamma_k \qquad (1 \le k \le m) \ ,$$

où les coefficients $\alpha_k^{(ij)}$, $\beta_k^{(j)}$ et $\gamma_k$ appartiennent à *K* , et où les quantités $y_k$ appartiennent également à *K.*

Vu l'intérêt croissant manifesté par les hommes du métier pour ces procédés cryptographiques utilisant des formes quadratiques, les auteurs de la présente invention se sont posé la question de savoir s'il était possible de mettre en oeuvre de tels procédés en mettant sous forme de table au moins certaines des étapes de calcul, et notamment le calcul de la valeur prise par une forme quadratique pour un multiplet $(x_1,...,x_n)$ donné, mais de manière à ce que les clés secrètes mises en jeu dans le procédé soient protégées contre des attaques en boîte-blanche.

Or, lorsque l'on tente de mettre en table une forme quadratique, une difficulté apparaît immédiatement : il s'agit de la capacité en mémoire requise pour stocker une telle table. Prenons par exemple à nouveau le cas *où* $n = 128$ et $K = GF(2)$, c'est-à-dire le cas où l'on traite des multiplets de 128 bits. Dans ce cas, la table doit contenir $2^{128}$ entrées possibles, et associer à chacune de ces entrées un multiplet de 128 bits ; par conséquent, la table requiert une capacité de stockage de $2^{128}$ x 1 bits, soit $2^{95}$ Gigaoctets!

La présente invention concerne donc un procédé selon la revendication 1.

calcul de la valeur des variables transformées $X_1$ ,..., $X_n$ associée à ladite valeur des variables $x_1$ ,..., $x_n$,

- calcul de la valeur des sous-ensembles associés à ladite valeur des variables transformées $X_1$,..., $X_n$, ledit calcul étant effectué au moyen de la table de valeurs pour le au moins un des sous-ensembles,

En effet, comme expliqué en détail ci-dessous, on peut montrer que toute forme quadratique à *n* variables sur un corps fini *K* peut, au moyen d'un changement de variable linéaire adéquat, être transformée en une somme de termes telle que chaque composante $X_i$ n'apparaisse que dans un seul terme au plus, sauf dans certains cas les composantes $X_{n-1}$ et $X_n$ qui apparaissent alors ensemble dans une somme de trois termes $(X_{n-1}X_n + X_{n-1}^2 + \delta X_n^2)$, où $\delta$ est une constante appartenant à *K*.

Grâce à cette propriété, on peut avantageusement mettre en table chaque terme de la somme séparément, plus, dans certains cas, la somme des trois termes $(X_{n-1}X_n + X_{n-1}^2 + \delta X_n^2)$. Par exemple, si $K = GF(2)$, une table donnant la valeur du terme $_nX_{2i+1}X_{2i+2}$ ou de la somme de termes $(X_{n-1}X_n + X_{n-1}^2 + \delta X_n^2)$ ne doit avoir qu'une capacité de stockage en mémoire de 4 bits (correspondant à 2 valeurs possibles pour chacune des deux variables). On peut naturellement aussi mettre en une seule table la somme de deux termes du type $_nX_{2i+1}X_{2i+2}$, avec une capacité de 4x4=16 bits, ou un nombre plus grand de termes si l'on dispose de capacités de stockage suffisantes. Il ne reste plus ensuite qu'à sommer les valeurs ainsi obtenues pour obtenir la valeur cherchée de la forme quadratique. Ainsi, en appliquant une transformation canonique aux formes quadratiques, la présente invention permet avantageusement la mise en table de tout procédé cryptographique comprenant au moins une forme quadratique en ne requérant que des capacités de stockage très modestes.

Ce procédé cryptographique mettant en oeuvre un calcul selon l'invention pourra alors avantageusement être protégé contre les attaques en boîte-blanche au moyen de "transformations parasites" insérées entre des sous-étapes successives du procédé qui sont calculées au moyen d'une table, conformément à l'enseignement de l'article *"White-Box Cryptography and an AES Implementation"* mentionné ci-dessus.

Selon des caractéristiques particulières, ledit calcul de la valeur des variables transformées $x_1$,..., $X_n$ est lui aussi réalisé au moyen d'une mise en table. Grâce à ces caractéristiques, ladite mise en oeuvre est avantageusement rapide et économique en termes de stockage en mémoire.

Corrélativement, l'invention concerne un système selon la revendication 3.

Les avantages offerts par ce système sont essentiellement les mêmes que ceux offerts par le procédé corrélatif succinctement exposé ci-dessus.

Selon des caractéristiques particulières, ce système comprend également des moyens pour réaliser ledit calcul de la valeur des variables transformées $X_1,...,X_n$ au moyen d'une mise en table. Grâce à ces caractéristiques, ladite mise en oeuvre est avantageusement rapide et économique en termes de stockage en mémoire.

D'autres aspects et avantages de l'invention apparaîtront à la lecture de la description détaillée ci-dessous de modes de réalisation particuliers, donnés à titre d'exemples non limitatifs.

L'invention s'applique à des calculs effectués sur tout corps fini $K$.

Par exemple, il peut s'agir de $GF(2^P)$, c'est-à-dire le corps de Fermi des $p$ -uplets d'éléments binaires ("bits"), où $p$ est un entier strictement positif ; en particulier, lorsque $p = 8$, les éléments du corps peuvent être vus comme des octets ("*bytes*" en anglais) d'éléments binaires ("*bits*" en anglais).

La mise en forme canonique des formes quadratiques sur un corps fini $K$ de cardinal $q$ au moyen d'une transformation linéaire des $n$ variables est présentée par exemple dans les pages 278 à 289 du livre "Finite Fields" de R. Lidl et H. Niederreiter (volume 20 de "Encyclopedia of Mathematics and its Applications", Cambridge University Press, 2ème éd., 1997). Les divers cas possibles pour la forme canonique équivalente sont les suivants :

- si $q$ est impair, on peut mettre la forme quadratique sous la forme d'une pure somme de carrés des variables transformées $X_i$,
- si $q$ est pair et $n$ est impair, on peut mettre la forme quadratique sous la forme

$$X_1 X_2 + X_3 X_4 + ... + X_{n-2} X_{n-1} + X_n^{\ 2},$$

et

- si $q$ est pair et $n$ est pair, on peut mettre la forme quadratique soit sous la forme

$$X_1 X_2 + X_3 X_4 + ... + X_{n-2} X_{n-1} + X_{n-1} X_n,$$

soit sous la forme

$$X_1 X_2 + X_3 X_4 + ... + X_{n-2} X_{n-1} + X_{n-1} X_n + X_{n-1}^{\ 2} + \delta X_n^{\ 2},$$

où $\delta$ est une constante appartenant à $K$.

On va maintenant présenter, uniquement à titre illustratif, un exemple numérique simple de mise en table selon l'invention. On choisit $K = GF(2)$, c'est-à-dire que $q = 2$ et les "nombres" considérés sont des bits.

Supposons donc que, dans le cadre d'un procédé cryptographique quelconque (tel que chiffrement, authentification ou signature), une étape comprenne le calcul de la fonction

$$f(x_1, x_2, x_3, x_4) = x_1 x_2 + x_2 x_4 + x_3 x_4 + x_1 + x_2 + x_3 + 1$$

opérant sur $n = 4$ bits $x_1, x_2, x_3, x_4$. On note que cette fonction comprend :

- une partie quadratique $x_1 x_2 + x_2 x_4 + x_3 x_4$, et
- une partie affine $x_1 + x_2 + x_3 + 1$.

Conformément à l'invention, on va appliquer un changement de variable linéaire afin de mettre la partie quadratique sous forme canonique. On notera pour ce faire que $\lambda^2 = \lambda$ pour tout nombre $\lambda$ (c'est-à-dire $\lambda = 0$ ou $\lambda = 1$) de $GF(2)$. La fonction $f$ ci-dessus peut donc s'écrire :

$$f(x_1, x_2, x_3, x_4) = (x_1 + x_2 + x_3)(x_2 + x_3 + x_4) + x_1(x_3 + x_4) + x_1 + 1$$

Le changement de variable X = *Lx* adéquat est donc le suivant :

$$X_1 = x_1 + x_2 + x_3$$

$$X_2 = x_2 + x_3 + x_4$$

$$X_3 = x_3 + x_4$$

$$X_4 = x_1$$

Avec

$$L = \begin{pmatrix} 1 & 1 & 1 & 0 \\ 0 & 1 & 1 & 1 \\ 0 & 0 & 1 & 1 \\ 1 & 0 & 0 & 0 \end{pmatrix}$$

ce changement de variable pouvant, optionnellement, être mis en oeuvre sous la forme de tables.
La forme canonique équivalente à la fonction *f* est donc la suivante :

$$g(X_1, X_2, X_3, X_4) = X_1 X_2 + X_3 X_4 + X_4 + 1$$

Procédons à présent à la mise en table de cette fonction $g(X_1, X_2, X_3, X_4)$. On peut écrire :

$$L = \left( C_1 \middle| C_2 \middle| C_3 \middle| C_4 \right)$$

$$X = \begin{pmatrix} X_1 \\ X_2 \\ X_3 \\ X_4 \end{pmatrix}$$

$$L \times X = C_1 \times X_1 + C_2 \times X_2 + C_3 \times X_3 + C_4 \times X_4$$

Cela permet de mettre en table séparément les quatre opérations $C_i \times X_i$ au moyen de quatre tables de 8 bits (un octet) chacune, correspondant aux deux valeurs possibles pour $X_i$. On notera que l'on peut en outre, optionnellement, mettre en table la somme des résultats ainsi obtenus.
On pourrait aussi, si on le souhaite, procéder par paire de colonnes de la matrice L, telle que

$$C_1 \big| C_2 = \begin{pmatrix} 1 & 1 \\ 0 & 1 \\ 0 & 0 \\ 1 & 0 \end{pmatrix}$$

ce qui donne des tables de 2 octets chacune, telle que

$$C_1 \big| C_2 (Entrée = '00') = '0000'$$

$$C_1 \big| C_2 (Entrée = '01') = '1100'$$

$$C_1 \big| C_2 (Entrée = '10') = '1001'$$

$$C_1 \big| C_2 (Entrée = '11') = '0101'$$

que l'on peut mémoriser simplement sous la forme

$$'0000 \big| 1100 \big| 1001 \big| 0101'$$

On procède alors de manière analogue pour mettre en table les termes de la fonction *g*. On rappelle que, grâce à l'invention, les termes de la forme quadratique peuvent être mis en table séparément, car la transformation canonique a eu pour effet que chaque variable n'apparaît que dans un seul terme quadratique de la forme obtenue. Par exemple, la mise en table du produit $X_1 X_2$ donne la suite '0|0|0|1', ce qui requiert une capacité de mémoire de 4 bits. De même, la somme $(X_3 X_4 + X_4)$ ne requiert que 4 bits de mémoire. Si on le souhaite, on peut même mettre en une seule table la fonction

$$g(X_1, X_2, X_3, X_4) = X_1 X_2 + X_3 X_4 + X_4 + 1$$

toute entière, en réservant pour ce calcul une capacité en mémoire de 16 bits.

Tout procédé cryptographique mettant en oeuvre un calcul selon l'invention pourra alors avantageusement être protégé contre les attaques en boîte-blanche au moyen de "transformations parasites" insérées entre des sous-étapes successives du procédé qui sont calculées au moyen d'une boîte-blanche au moyen de "transformations parasites" insérées entre des sous-étapes successives du procédé qui sont calculées au moyen d'une table, conformément à l'enseignement de l'article *"White-Box Cryptography and an AES Implementation"* mentionné ci-dessus.

La présente invention trouve son application dans le cadre de nombreuses applications mettant en jeu des contenus numériques.

## Revendications

1.   Procédé de protection par un dispositif d'un algorithme cryptographique contre des attaques en boîte blanche, ledit algorithme comprenant une étape de calcul d'une forme quadratique

$$Y = A(x_1, ..., x_n) = \sum_{1 \le i \le j \le n} \alpha^{(ij)} x_i x_j \,,$$

où les $n > 1$ variables $x_1,...,x_n$ ainsi que les coefficients $\alpha^{(ij)}$ appartiennent à un corps fini $K$ à q éléments, et où $Y$ est la valeur prise par la forme quadratique $A(x_1,..., x_n)$ pour une valeur donnée des variables $x_1,..., x_n$, **caractérisé en ce que**, pour réaliser ladite étape de calcul, un premier dispositif met en oeuvre les sous-étapes suivantes :

- détermination, en fonction de la parité de $q$ et de $n$, d'une forme quadratique canonique

$$Y = C(X_1,...,X_n) = \sum_{\substack{0 \le i \le (n-2)/2 \\ 0 \le i \le (n-3)/2}} \gamma_i\, X_{2i+1}\, X_{2i+2} \;+\; \sum_{1 \le i \le n} \delta_i\, X_i^{\,2},$$

où les variables $X_1,..., X_n$ ainsi que les coefficients $\gamma_i$ et $\delta_i$ appartiennent audit corps $K$, équivalente à ladite forme $A(x_1,...,x_n)$, et d'un changement de variable linéaire $X = Lx$ associé à cette mise sous forme canonique,
- subdivision de l'ensemble des termes de ladite forme quadratique canonique $C(X_1,..., X_n)$ en sous-ensembles comprenant chacun un ou plusieurs de ces termes,
- mise en table de valeurs d'au moins un des sous-ensembles,

et un deuxième dispositif met en oeuvre les sous-étapes suivantes :

- calcul de la valeur des variables transformées $X_1,..., X_n$ associée à ladite valeur des variables $x_1,...., x_n$,
- calcul de la valeur des sous-ensembles associés à ladite valeur des variables transformées $X_1,...,X_n$, ledit calcul étant effectué au moyen de la table de valeurs pour le moins un des sous-ensembles,
- somme de la valeur de chacun desdits sous-ensembles pour obtenir ladite valeur **Y** prise par la forme quadratique,

le procédé comprenant en outre des transformations parasites insérées entre les sous-étapes successives du procédé qui sont calculées au moyen d'une table.

**2.** Procédé selon la revendication 1, **caractérisé en ce que** ledit calcul de la valeur des variables transformées $X_1,...,X_n$ est lui aussi réalisé au moyen d'une mise en table.

**3.** Système pour protéger un algorithme cryptographique contre des attaques en boîte blanche, ledit algorithme comprenant une étape de calcul d'une forme quadratique

$$Y = A(x_1,...,x_n) = \sum_{1 \le i \le j \le n} \alpha^{(ij)}\, x_i x_j,$$

où les $n > 1$ variables $x_1,...,x_n$ ainsi que les coefficients $\alpha^{(ij)}$ appartiennent à un corps fini $K$ à q éléments, et où $Y$ est la valeur prise par la forme quadratique $A(x_1,...,x_n)$ pour une valeur donnée des variables $x_1,...,x_n$, **caractérisé en ce que**, pour réaliser ladite étape de calcul, ledit système comprend :

un premier dispositif comprenant :

- des moyens pour déterminer, en fonction de la parité de $q$ et de $n$ , une forme quadratique canonique

$$Y = C(X_1,...,X_n) = \sum_{\substack{0 \le i \le (n-2)/2 \\ \text{ou} \\ 0 \le i \le (n-3)/2}} \gamma_i\, X_{2i+1}\, X_{2i+2} \;+\; \sum_{1 \le i \le n} \delta_i\, X_i^{\,2},$$

où les variables $X_1,..., X_n$ ainsi que les coefficients $\gamma_i$ et $\delta_i$ appartiennent audit corps $K$, équivalente à ladite forme $A(x_1,...,x_n)$, et un changement de variable linéaire $X = Lx$ associé à cette mise sous forme canonique,
- des moyens pour subdiviser l'ensemble des termes de ladite forme quadratique canonique $C(X_1,...,X_n)$ en sous-ensembles comprenant chacun un ou plusieurs de ces termes,
- des moyens pour mettre en table de valeurs au moins un desdits sous-ensembles,

et un deuxième dispositif comprenant :

- des moyens pour calculer la valeur des variables transformées $X_1,..., X_n$ associée à ladite valeur des variables $x_1,...,x_n$,
- des moyens pour calculer la valeur des sous-ensembles associés à ladite valeur des variables transformées $X_1,...,X_n$, ledit calcul étant effectué au moyen de la table de valeurs pour le au moins un des sous-ensembles, et
- des moyens pour sommer la valeur de chacun desdits sous-ensembles pour obtenir ladite valeur $Y$ prise par la forme quadratique, les moyens pour mettre en oeuvre des calculs au moyen d'une table étant adaptés à réaliser des transformations parasites insérées entre ces calculs successifs.

4. Système selon la revendication 3, **caractérisé en ce qu'**il comprend également des moyens pour réaliser ledit calcul de la valeur des variables transformées $X_1,..., X_n$ au moyen d'une mise en table.

**Patentansprüche**

1. Verfahren zum Schützen mittels einer Vorrichtung eines kryptographischen Algorithmus vor White-Box-Angriffen, wobei der Algorithmus einen Rechenschritt mit quadratischer Form

$$Y = A\left(x_1, \ldots, x_n\right) = \sum_{1 \le i \le j \le n} \alpha^{(ij)} x_i x_j$$

enthält, wobei die $n > 1$ Variablen $x_1, ..., x_n$ sowie die Koeffizienten $\alpha^{(ij)}$ zu einem endlichen Körper $K$ mit $q$ Elementen gehören und wobei $Y$ der Wert ist, den die quadratische Form $A(x_1, ..., x_n)$ für einen gegebenen Wert der Variablen $x_1, ..., x_n$ annimmt,
**dadurch gekennzeichnet, dass** für die Ausführung des Rechenschrittes eine erste Vorrichtung die folgenden Unterschritte ausführt:

Bestimmen als Funktion der Parität von $q$ und von $n$ einer kanonischen quadratischen Form

$$Y = C\left(X_1, \ldots, X_n\right) = \sum_{\substack{0 \le i \le (n-2)/2 \\ 0 \le i \le (n-3)/2}} \gamma_i X_{2i+1} X_{2i+2} + \sum_{1 \le i \le n} \delta_i X_i^2,$$

wobei die Variablen $X_1, ..., X_n$ sowie die Koeffizienten $\gamma_i$ und $\delta_i$ zu dem Körper $K$ gehören, die zu der Form $A(x_1, ..., x_n)$ äquivalent ist, und einer linearen variablen Änderung $X = Lx$, die diesem Bringen in kanonische Form zugeordnet ist,
- Unterteilen der Gesamtheit der Terme der kanonischen quadratischen Form $C(X_1, ..., X_n)$ in Untergesamtheiten, die jeweils einen oder mehrere dieser Terme enthalten,
- Bringen von Werten wenigstens einer der Untergesamtheiten in eine Tabelle,

und eine zweite Vorrichtung die folgenden Unterschritte ausführt:

- Berechnen des Wertes der transformierten Variablen $X_1, ..., X_n$, der dem Wert der Variablen $x_1, ..., x_n$ zugeordnet ist,
- Berechnen des Wertes der Untergesamtheiten, die dem Wert der transformierten Variablen $X_1, ..., X_n$ zugeordnet sind, wobei die Berechnung mittels der Tabelle von Werten für wenigstens eine der Untergesamtheiten ausgeführt wird,
- Summieren des Wertes jeder der Untergesamtheiten, um den Wert $Y$ zu erhalten, den die quadratische Form annimmt,

wobei das Verfahren außerdem parasitäre Transformationen umfasst, die zwischen die aufeinander folgenden Unterschritte des Verfahrens eingefügt werden und mittels einer Tabelle berechnet werden.

2. Verfahren nach Anspruch 1, **dadurch gekennzeichnet, dass** das Berechnen des Wertes der transformierten Va-

riablen $X_1$, ..., $X_n$ ebenfalls durch Bringen in eine Tabellenform verwirklicht wird.

**3.** System zum Schützen eines kryptographischen Algorithmus vor White-Box-Angriffen, wobei der Algorithmus einen Rechenschritt mit quadratischer Form

$$Y \;=\; A\left(x_1,\; \ldots,\; x_n\right) \;=\; \sum_{1\leq i\leq j\leq n} \alpha^{(ij)} x_i x_j$$

enthält, wobei die $n > 1$ Variablen $x_1$, ..., $x_n$ sowie die Koeffizienten $\alpha^{(ij)}$ zu einem endlichen Körper $K$ mit $q$ Elementen gehören und wobei $Y$ der Wert ist, den die quadratische Form $A(x_1, ..., x_n)$ für einen gegebenen Wert der Variablen $x_1$, ..., $x_n$ annimmt,
**dadurch gekennzeichnet, dass** das System für die Ausführung des Rechenschrittes Folgendes umfasst:

eine erste Vorrichtung, die umfasst:

- Mittel, um als Funktion der Parität von $q$ und von $n$ eine kanonische quadratische Form

$$Y \;=\; C\left(X_1,\; \ldots,\; X_n\right) \;=\; \sum_{\substack{0\leq i\leq (n-2)/2 \\ 0\leq i\leq (n-3)/2}} \gamma_i X_{2i+1} X_{2i+2} \;+\; \sum_{1\leq i\leq n} \delta_i X_i^2,$$

worin die Variablen $X_1$, ..., $X_n$ sowie die Koeffizienten $\gamma_i$ und $\delta_i$ zu den Körper $K$ gehören, die zu der Form $A(x_1, ..., x_n)$ äquivalent ist, und eine lineare Änderung der Variablen $X = Lx$, die diesem Bringen in kanonische Form zugeordnet ist, zu bestimmen,
- Mittel, um die Gesamtheit der Terme der kanonischen quadratischen Form $C(X_1, ..., X_n)$ in Untergesamtheiten zu unterteilen, die jeweils einen oder mehrere dieser Terme enthalten,
- Mittel, um Werte wenigstens einer dieser Untergesamtheiten in Tabellenform zu bringen,

und eine zweite Vorrichtung, die umfasst:

- Mittel, um den Wert der transformierten Variablen $X_1$, ..., $X_n$ zu berechnen, der dem Wert der Variablen $x_1$, ..., $x_n$ zugeordnet ist,
- Mittel, um den Wert der Untergesamtheiten, die dem Wert der transformierten Variablen $X_1$, ..., $X_n$ zugeordnet sind, zu berechnen, wobei die Berechnung mittels der Tabelle von Werten für die wenigstens eine der Untergesamtheiten ausgeführt wird, und
- Mittel zum Summieren des Wertes jeder der Untergesamtheiten, um den Wert $Y$, den die quadratische Form annimmt, zu erhalten, wobei die Mittel zum Ausführen der Berechnungen mittels einer Tabelle dafür ausgelegt sind, parasitäre Transformationen auszuführen, die zwischen die aufeinander folgenden Berechnungen eingefügt werden.

**4.** System nach Anspruch 3, **dadurch gekennzeichnet, dass** es außerdem Mittel umfasst, um die Berechnung des Wertes der transformierten Variablen $X_1$, ..., $X_n$ durch Bringen in eine Tabelle auszuführen.

**Claims**

**1.** Method of protection by a device of a cryptographic algorithm against white-box attacks, said algorithm comprising a step of computing a quadratic form

$$Y = A(x_1,\ldots,x_n) = \sum_{1\leq i\leq j\leq n} \alpha^{(ij)} x_i x_j,$$

where the $n > 1$ variables $x_1,\ldots,x_n$ as well as the coefficients $\alpha^{(ij)}$ belong to a finite field $K$ with $q$ elements, and where $Y$ is the value taken by the quadratic form $A(x_1,\ldots,x_n)$ for a given value of the variables $x_1,\ldots,x_n$, **characterized in that**, to carry out the said computation step, a first device implements the following substeps:

- determination, as a function of the parity of $q$ and of $n$, of a canonical quadratic form

$$Y = C(X_1,...,X_n) = \sum_{\substack{0 \le i \le (n-2)/2 \\ 0 \le i \le (n-3)/2}} \gamma_i\, X_{2i+1}\, X_{2i+2} \quad + \sum_{1 \le i \le n} \delta_i\, X_i^{\,2},$$

where the variables $X_1,...,X_n$ as well as the coefficients $\gamma_i$ and $\delta_i$ belong to said field $K$, equivalent to said form $A(x_1,...,x_n)$, and of a linear change of variable $X = Lx$ associated with this casting into canonical form,
- subdivision of the set of terms of said canonical quadratic form $C(X_1, ..., X_n)$ into subsets each comprising one or more of these terms,
- tabling of the values of at least one of the substeps,

and a second device implements the following substeps:

- computation of the value of the transformed variables $X_1,..., X_n$ associated with said value of the variables $x_1,...,x_n$,
- computation of the value of the subsets associated with said value of the transformed variables $X_1,...,X_n$, said computation being performed by means of the table of values for the at least one of the subsets,
- summing of the value of each of said subsets to obtain said value $Y$ taken by the quadratic form,

the method furthermore comprising parasitic transformations inserted between the successive substeps of the method which are computed by means of a table.

2. Method according to Claim 1, **characterized in that** said computation of the value of the transformed variables $X_1,..,X_n$ is likewise carried out by means of a tabling.

3. System for protecting a cryptographic algorithm against white-box attacks, said algorithm comprising a step of computing a quadratic form

$$Y = A(x_1,...,x_n) = \sum_{1 \le i \le j \le n} \alpha^{(ij)}\, x_i x_j \,,$$

where the $n > 1$ variables $x_1, ..., x_n$ as well as the coefficients $\alpha^{(ij)}$ belong to a finite field $K$ with $q$ elements, and where $Y$ is the value taken by the quadratic form $A(x_1,...,x_n)$ for a given value of the variables $x_1,...,x_n$, **characterized in that**, to carry out said computation step, said system comprises:

a first device comprising:

- means for determining, as a function of the parity of $q$ and of $n$, a canonical quadratic form

$$Y = C(X_1,...,X_n) = \sum_{\substack{0 \le i \le (n-2)/2 \\ 0 \le i \le (n-3)/2}} \gamma_i\, X_{2i+1}\, X_{2i+2} \quad + \sum_{1 \le i \le n} \delta_i\, X_i^{\,2},$$

where the variables $X_1,...,X_n$ as well as the coefficients $\gamma_i$ and $\delta_i$ belong to said field $K$, equivalent to said form $A(x_1,...,x_n)$, and a linear change of variable $X = Lx$ associated with this casting into canonical form,
- means for subdividing the set of terms of said canonical quadratic form $C(X_1,...,X_n)$ into subsets each comprising one or more of these terms,
- means for tabling the values of at least one of said subsets,

and a second device comprising:

- means for computing the value of the transformed variables $X_1,...,X_n$ associated with said value of the variables $x_1,...,x_n$,
- means for computing the value of the subsets associated with said value of the transformed variables

$X_1,...,X_n$, said computation being performed by means of the table of values for the at least one of the subsets, and

- means for summing the value of each of said subsets to obtain said value $Y$ taken by the quadratic form, the means for implementing computations by means of a table being adapted to carry out parasitic transformations inserted between these successive computations.

**4.** System according to Claim 3, **characterized in that** it also comprises means for carrying out said computation of the value of the transformed variables $X_1,...,X_n$ by means of a tabling.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007116171 A

**Littérature non-brevet citée dans la description**

- Revisiting Software Protection. **P.C. VAN OOR-SCHOT.** Actes de la 6ème Conférence Internationale. Springer-Verlag, 2003, 1-13
- White-Box Cryptography and an AES Implementation. **S. CHOW ; P. EISEN ; H. JOHNSON ; P.C. VAN OORSCHOT.** Actes du 9ème ''Annual Workshop on Selected Areas in Cryptography. Springer, 2003, 250-270
- A White-Box DES Implementation for DRM Applications. Second ACM Workshop on Digital Rights Management. Springer, 2003, 1-15
- Unbalanced Oil and Vinegar Signature Schemes. **A. KIPNIS ; J. PATARIN ; L. GOUBIN.** EUROCRYPT. 1999, 206-222
- Finite Fields. **R. LIDL ; H. NIEDERREITER.** Encyclopedia of Mathematics and its Applications. Cambridge University Press, 1997, vol. 20, 278-289